# EUROPÄISCHE PATENTSCHRIFT

(11) **EP 1 016 278 B1**
(45) Veröffentlichungstag und Bekanntmachung des Hinweises auf die Patenterteilung: **10.04.2002**
(21) Anmeldenummer: 98955332.6
(22) Anmeldetag: 15.09.1998
(51) Int. Cl.: H04N 7/035

(54) **ABTRENNSTUFE ZUM ABTRENNEN EINES SIGNALS, DAS IN AUSTASTLÜCKEN EINES VIDEOSIGNALS ÜBERTRAGEN WIRD UND ENTZERRUNGSVERFAHREN FÜR EIN SOLCHES SIGNAL**
SEPARATION LEVEL TO SEPARATE A SIGNAL TO BE TRANSMITTED IN THE BLANKING INTERVALS OF A VIDEO SIGNAL AND RECTIFICATION METHOD FOR SAID SIGNAL
INTERCALAIRE DE SEPARATION POUR LA SEPARATION D'UN SIGNAL TRANSMIS DANS DES INTERVALLES DE SUPPRESSION D'UN SIGNAL VIDEO ET PROCEDE DE REDRESSEMENT D'UN TEL SIGNAL

(30) Priorität: 19.09.1997 DE 19741434
(43) Veröffentlichungstag der Anmeldung: 05.07.2000
(73) Patentinhaber: Micronas Munich GmbH, 81541 München (DE)
(72) Erfinder: BEINTKEN, Hartmut, D-81541 München (DE); ENGLERT, Ulrich, D-81549 München (DE); GLASSNER, Christian, D-81549 München (DE)
(74) Vertreter: Patentanwälte Westphal, Mussgnug & Partner
(86) Internationale Anmeldenummer: DE9802733
(87) Internationale Veröffentlichungsnummer: WO9916245

(56) Entgegenhaltungen:
- EP-A- 0 056 649
- EP-A- 0 099 543
- PATENT ABSTRACTS OF JAPAN vol. 008, no. 185 (E-262), 24. August 1984 & JP 59 077779 A (NEC HOME ELECTRONICS KK), 4. Mai 1984

## Beschreibung

Die Erfindung betrifft eine Abtrennstufe zum Abtrennen eines Signals, das in Austastlücken eines Videosignal übertragen wird sowie ein Entzerrungsverfahren für ein solches Signal.

Ein bekanntes Signal, das in Austastlücken eines Videosignals übertragen wird, ist in Europa der Teletext, der dem World Standard Text Format entspricht. Nachdem alle Bildzeilen eines Halbbildes eines Videosignals übertragen worden sind, folgt ein Vertikal-Synchronimpuls, der den Abtaststrahl der Bildröhre rücksetzt. Auf den Vertikal-Synchronimpuls folgt eine Austastlücke, in der keine Bildinformation übertragen wird. Diese Rücksetzpause bzw. Austastlücke wird zur Ubertragung des Teletextsignals oder anderer Datendienste genutzt. Jede Teletextzeile wird durch einen Horizontal-Synchronimpuls für den Elektronenstrahl einer Bildröhre des Fernsehempfängers eingeleitet.

Im Fernsehempfänger wird das Teletextsignal durch eine Abtrennstufe, dem sogenannten Slicer, aus dem Videosignal zurückgewonnen. Dazu erfolgt in einem ersten Schritt eine Datenabtrennung, bei der das empfangene Signal in binäre Daten zerlegt wird. Anschließend erfolgt eine Taktrückgewinnung, indem sich der Empfänger auf das empfangene Teletextsignal synchronisiert.

Das übertragene Teletextsignal kann unter anderem durch Rauschen, Gruppenlaufzeitverzerrung oder Dämpfungsverzerrung gestört sein.

Der Erfindung liegt die Aufgabe zugrunde, eine Abtrennstufe zum Abtrennen eines Signals, das in Austastlücken eines Videosignals übertragen wird, und ein Entzerrungsverfahren für ein derartiges Signal anzugeben, bei denen eine Entzerrung des Signals erfolgt.

Diese Aufgabe wird mit einem Entzerrungsverfahren gemäß Anspruch 1 und einer Abtrennstufe gemäß Anspruch 4 gelöst. Weiterbildungen und Ausführungen der Erfindung sind Gegenstand von abhängigen Ansprüchen.

Beim erfindungsgemäßen Entzerrungsverfahren wird anhand des empfangenen Signals festgestellt, ob eine Störung einer bestimmten Störungsart vorliegt. Eine wenigstens teilweise Kompensation dieser Störung wird nur durchgeführt, wenn sie einen bestimmten Grenzwert überschreitet, so daß unerhebliche Störungen unberücksichtigt bleiben. Eine Entzerrung erfolgt also nur, wenn tatsächlich auch eine Störung vorhanden ist. Außerdem wird die Kompensation von der Art der Störung abhängig gemacht, so daß jede Störungsart optimal kompensiert werden kann.

Die Erfindung ist vorteilhaft, da sich in der Praxis Art und Grad der Störung des zu entzerrenden Signals ständig ändert. Eine starke frequenzabhängige Dämpfung beispielsweise läßt sich durch ein Peaking-Filter kompensieren. Ist das zugeführte Teletextsignal jedoch ungestört, würde durch ein Peaking-Filter die Augenhöhe des Signals erheblich verringert.

Eine Ausführungsform der Erfindung betrifft die Kompensation von Gruppenlaufzeitverzerrungen. Sie sieht vor, daß aus einem relativ hochfrequenten Abschnitt des Signals ein Abtastsignal abgeleitet wird, mit dem ein relativ niedrigfrequenter Abschnitt des Signals abgetastet wird. Zur Feststellung der Störung wird ermittelt, ob Signalflanken innerhalb des niedrigfrequenten Abschnitts relativ zur Abtastimpulsen des Abtastsignals eine vorbestimmte bzw. erwartete Lage aufweisen.

Auf diese Weise läßt sich feststellen, ob Signalflanken des niedrigfrequenten Abschnitts in einem erwarteten zeitlichen Verhältnis zu den Abtastimpulsen des Abtastsignals stehen. Hierfür ist es natürlich erforderlich, daß dieses zeitliche Verhältnis für den Fall bekannt ist, daß das Signal ungestört ist.

Ergibt sich, daß die Signalflanken des niedrigfrequenten Abschnitts relativ zu den Abtastimpulsen des Abtastsignals nicht die erwartete zeitliche Beziehung aufweisen, und ist diese Abweichung größer als ein vorgebbarer Grenzwert, erfolgt eine Kompensation der Gruppenlaufzeitverzerrungen. Nach einer Ausführungsform der Erfindung wird hierfür ein Allpaß verwendet.

Nach einer vorteilhaften Ausführungsform der Erfindung wird die beschriebene Entzerrung der Gruppenlaufzeitverzerrungen auf ein Teletextsignal angewendet. Der hochfrequente Abschnitt enthält dabei Synchronisationsimpulse des Teletextsignals und sein niedrigfrequenter Abschnitt ist Teil eines Rahmenkennwortes des Teletextsignals. Sowohl die Synchronisationsimpulse ("clock run in") als auch sein Rahmen-Kennwort ("frame code") sind bei einem Teletextsignal genormt. Daher eignen sich diese in vorteilhafter Weise für die beschriebene Feststellung, ob Gruppenlaufzeitverzerrungen vorliegen oder nicht.

Statt durch einen Allpaß erfolgt bei einer alternativen Ausführungsform der Erfindung die Kompensation der frequenzabhängigen Dämpfung durch Anpassung der Frequenz des Abtastsignals in der Weise, daß die Signalflanken des niedrigfrequenten Abschnitts anschließend relativ zu den Abtastimpulsen des angepaßten Abtastsignals die vorbestimmte Lage aufweisen. Dies geschieht durch gegenseitige Phasenverschiebung.

Eine andere Ausführungsform der Erfindung betrifft die Kompensation einer frequenzabhängigen Dämpfung. Bei einer solchen Störungsart werden bei der Signalübertragung hochfrequente Signalanteile stärker gedämpft als niedrigfrequente Signalanteile. Zur Feststellung einer frequenzabhängigen Dämpfung wird daher ein Scheitelwert eines relativ hochfrequenten Abschnitts des Signals mit einem Referenzwert verglichen. Überschreitet die Differenz zwischen dem Scheitelwert und dem Referenzwert einen Grenzwert, steht fest, daß der hochfrequente Abschnitt stark gedämpft wurde. Wird das Vorliegen einer frequenzabhängigen Dämpfung auf diese Weise festgestellt, erfolgt eine Kompensation der Störung, beispielsweise mit einem Peaking-Filter, welches hochfrequente Abschnitte eines Signals gegenüber niedrigfrequenten Abschnitten verstärkt.

Nach einer Ausführungsform der Erfindung ist der Referenzwert, mit dem der Scheitelwert des hochfrequenten Abschnitts verglichen wird, ein Schwarzwert des Videosignals.

In einer vorteilhaften Ausführungsform der Erfindung ist das Signal wiederum ein Teletextsignal, der hochfrequente Abschnitt, anhand dessen die frequenzabhängige Dämpfung festgestellt wird, enthält Synchronisationsimpulse des Teletextsignals. Bei den Synchronisationsimpulsen eines Teletextsignals (clock run in) handelt es sich, wie bereits erwähnt, um einen genormten Signalabschnitt. Es handelt sich dabei um eine Folge alternierender Nullen und Einsen, so daß die Synchronisationsimpulse immer denjenigen Abschnitt des Teletextsignals bilden, der die höchste Frequenz aufweist. Daher eignen sich die Synchronisationsimpulse des Teletextsignals besonders gut sowohl zur Feststellung der frequenzabhängigen Dämpfung, als auch zur Generierung des hochfrequenten Abtastsignals zur Feststellung der Gruppenlaufzeitverzerrung gemäß der weiter oben beschriebenen Ausführungsform der Erfindung.

Die erfindungsgemäße Abtrennstufe weist zur Durchführung des erfindungsgemäßen Verfahrens eine Meßvorrichtung auf, die anhand des empfangenen Signals feststellt, ob dieses eine Störung einer bestimmten Störungsart aufweist. Eine wenigstens teilweise Kompensation erfolgt bei ihr nur, sofern die Störung einen Grenzwert überschreitet.

Die Erfindung wird im folgenden anhand der Figuren, die Ausführungsbeispiele der Erfindung zeigen, näher erläutert. Es zeigen:
- Figur 1: ein Ausführungsbeispiel der erfindungsgemäßen Abtrennstufe,
- Figur 2: ein durch eine frequenzabhängige Dämpfung verzerrtes Teletextsignal,
- Figur 3a: ein unverzerrtes Rahmen-Kennwort eines Teletextsignals,
- Figur 3b: ein Rahmenkennwort, das durch eine Gruppenlaufzeitverzerrung gestört ist,
- Figur 4: den Frequenzgang eines Peaking Filters,
- Figur 5a: ein durch frequenzabhängige Dämpfung gestörtes Teletextsignal, und
- Figur 5b: das Teletextsignal aus Figur 5a, bei dem die Verzerrung kompensiert wurde.

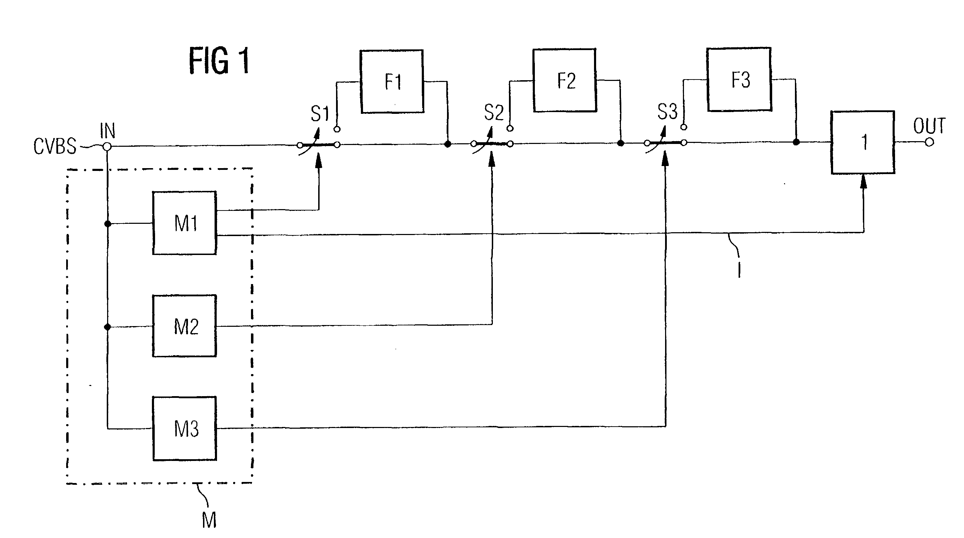

Figur 1 zeigt ein Ausführungsbeispiel der erfindungsgemäßen Abtrennstufe. Ihr ist an einem Eingang IN ein Videosignal CVBS (Colour Video Broadcasting Signal) zuführbar, das Austastlücken aufweist, in denen ein Teletextsignal übertragen wird. Die Abtrennstufe weist eine Meßvorrichtung M auf, die verschieden Meßeinheiten M1 bis M3 enthält, die zur Feststellung unterschiedlicher Arten von Störungen des Teletextsignals dienen. Weiterhin weist die Abtrennstufe für jede der Meßeinheiten M1 bis M3 ein entsprechendes Filter F1 bis F3 auf, das zur Kompensation der jeweiligen Störungsart dient und nur aktiviert wird, wenn die zugehörige Meßeinheit M1 bis M3 das Vorliegen der entsprechenden Störungsart beim empfangenen Teletextsignal feststellt. Durch Schalter S1 bis S3 ist in Figur 1 angedeutet, daß die Filter F1 bis F3 überbrückt, das heißt deaktiviert sind, sofern die zugehörige Meßeinheit M1 bis M3 die jeweilige Störungsart nicht feststellt. Stellt eine der Meßeinheiten M1 bis M3 dagegen fest, daß die durch sie zu überwachende Störungsart beim empfangenen Teletextsignal vorliegt, aktiviert sie über den entsprechenden Schalter S1 bis S3 den zugehörigen Filter F1 bis F3, so daß dieser nun im Signalpfad des Teletextsignals zwischen den Eingang IN und einen Ausgang OUT der Abtrennstufe geschaltet ist.

Bei diesem Ausführungsbeispiel dient die erste Meßeinheit M1 der Messung einer eventuellen positiven oder negativen Gruppenlaufzeitverzerrung des Teletextsignals, die zweite Meßeinheit M2 der Messung einer frequenzabhängigen Dämpfung und die dritte Meßeinheit M3 der Messung von Rauschen. Das erste Filter F1 ist ein Allpaß, das zweite Filter F2 ein Peaking-Filter und das dritte Filter F3 ein Filter zur Kompensation von Rauschen. Die in Figur 1 gezeigten Komponenten sind vorzugsweise hardwaremäßig realisiert, können jedoch auch softwaremäßig ausgeführt sein.

Den Filtern F1 bis F3 nachgeschaltet ist eine Abtrenneinheit 1, die, wie bei herkömmlichen Abtrennstufen, einer Datenabtrennung und einer anschließenden Taktrückgewinnung des Teletextsignals dient.

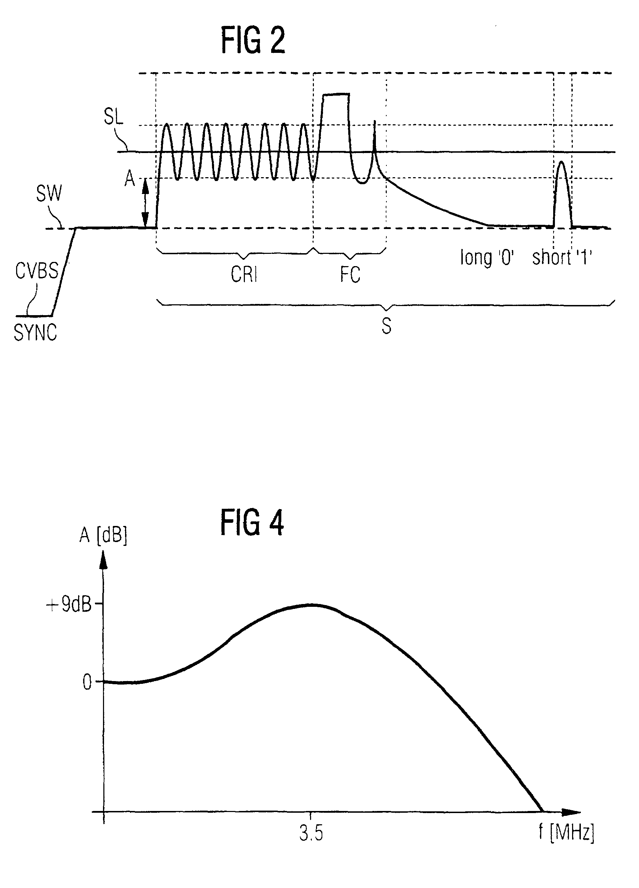

Figur 2 zeigt die Anfangssequenz eines Teletextsignals S. Eine Zeile des Teletextsignals S wird nach je einem Horizontal-Synchronimpuls SYNC für einen Elektronenstrahl eines Fernsehempfängers übertragen, der in einer Austastlücke des Videosignals CVBS auftritt. Während der Austastlücke wird der Elektronenstrahl dunkel getastet. Das Teletextsignal S beginnt mit genormten Synchronisationsimpulsen CRI (Clock Run In).

Die Synchronisationsimpulse CRI dienen einer Bitsynchronisation der Abtrennstufe auf das Teletextsignal. Zur Unterscheidung, ob eine logische "1" oder eine logische "0" vorliegt, wird in der Abtrenneinheit 1 in Figur 1 aus den Synchronisationsimpulsen CRI durch Bildung eines arithmetischen Mittelwertes ein Abtrennpegel SL (Slicing Level) ermittelt. Anschließend erfolgt eine Rückgewinnung des Bittakts, indem die Synchronisationsimpulse einer Phase Locked Loop zugeführt werden. Das auf diese Weise erzeugte Abtastsignal dient zur Abtastung des empfangenen Teletextsignals. Abtastwerte, die oberhalb des Abtrennpegels SL liegen, werden als logische "1", Abtastwerte, die unterhalb des Abtrennpegels SL liegen, als logische "0" erkannt.

Auf die Synchronisationsimpulse CRI folgt beim Teletextsignal S in Figur 2 ein ebenfalls genormtes Rahmen-Kennwort FC (Framing Code). Während für die Synchronisationsimpulse die Bitfolge 1010 1010 1010 1010 gilt, hat das Rahmenkennwert FC das Format 1110 0100. Es dient einer Byte-Synchronisation des Teletextsignals. Ein Teletextsignal wird im Non-Return-to-Zero-Format (NRZ-Format) übertragen. Das bedeutet, daß das Teletextsignal nur bei einem Wechsel von einer logischen "0" auf eine logische "1" bzw. umgekehrt eine Signalflanke aufweist.

Nach dem Rahmenkennwort FC folgt die eigentliche Nutzinformation des Teletextsignals. In Figur 2 ist ein Beispiel für eine mögliche Störungsart des Teletextsignals eingezeichnet. Es handelt sich um eine frequenzabhängige Dämpfung. Deutlich zu sehen ist, daß der hochfrequente Abschnitt der Synchronisationsimpulse CRI stärker gedämpft ist als die niedrigfrequenten Abschnitte des Rahmenkennworts FC mit drei aufeinanderfolgenden Einsen bzw. zwei aufeinanderfolgenden Nullen. In Figur 2 folgt auf das Rahmenkennwort FC eine relativ lange Folge von logischen Nullen, so daß der Pegel des Teletextsignals S sich einem Schwarzwert SW des Videosignals CVBS annähert. Folgt dann, wie gezeigt, eine einzige logische "1", gefolgt von weiteren Nullen, führt dies durch die frequenzabhängige Dämpfung dazu, daß der Abtrennpegel SL nicht überschritten wird, so daß die logische "1" nicht als solche erkannt wird.

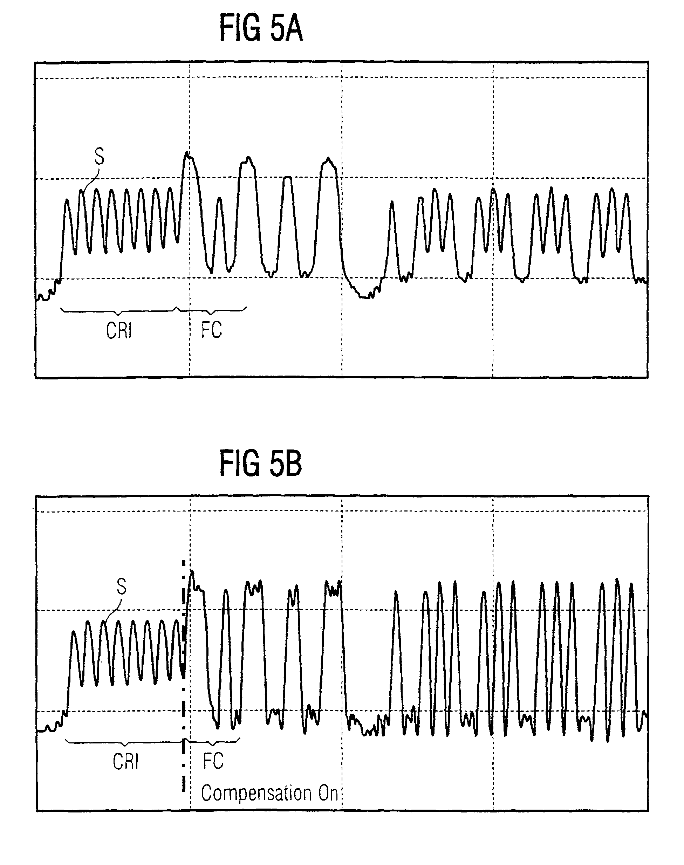

Figur 5a zeigt ebenfalls ein durch frequenzabhängige Dämpfung verzerrtes Teletextsignal S. Es beginnt wiederum mit Synchronisationsimpulsen CRI und einem Rahmenkennwort FC. Zur Feststellung, ob eine frequenzabhängige Dämpfung vorliegt, stellt die zweite Meßeinheit M2 aus Figur 1 fest, wie groß die Differenz zwischen den Minima A der Synchronisationsimpulse und dem Schwarzwert SW des Videosignals CVBS ist (siehe Figur 2). Ist das Signal frequenzunabhängig gedämpft oder ungedämpft, liegen die Minima der Synchronisationsimpulse CRI im Bereich des Schwarzwertes SW. Sind dagegen die hohen Frequenzen stark gedämpft, liegen diese Minima A signifikant über dem Schwarzwert SW. Überschreitet diese Differenz einen vorgegebenen Wert, steht fest, daß die hochfrequenten Synchronisationsimpulse CRI zu stark gedämpft wurden, und die zweite Meßeinheit M2 aktiviert über den zweiten Schalter S2 das zweite Filter F2. Das zweite Filter F2 ist ein Peaking-Filter mit einem in Figur 4 dargestellten Frequenzgang. Dieses verstärkt nur die hohen Frequenzen und läßt die Signalanteile niedrigerer Freqenzen unverändert. Die Synchronisationsimpulse CRI haben eine Frequenz von 3,5MHz.

Figur 5b zeigt das Teletextsignal S aus Figur 5a, nachdem durch die zweite Meßeinheit M2 das zweite Filter F2 aktiviert worden ist. Während des Empfangs der Synchronisationsimpulse CRI führt die zweite Meßeinheit M2 die beschriebene Störungsmessung durch, so daß hier das zweite Filter F2 noch nicht aktiviert ist. Erkennt die zweite Meßeinheit M2 das Vorliegen einer frequenzabhängigen Dämpfung, aktiviert sie vor dem Beginn des Rahmenkennworts FC das zweite Filter F2. Figur 5b ist deutlich zu entnehmen, daß die hochfrequenten Anteile des Teletextsignals S während der Kompensation verstärkt werden.

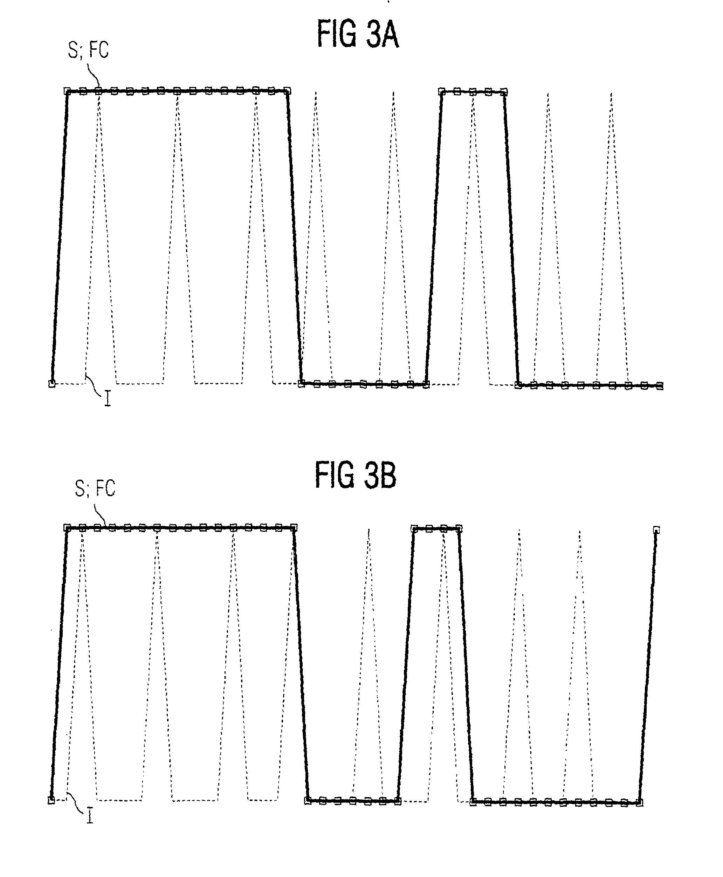

Anhand der Figuren 3a und 3b wird im folgenden die Funktion der ersten Meßeinheit M1 aus Figur 1 erläutert, die der Feststellung einer Gruppenlaufzeitverzerrung dient. Bei einer positiven Gruppenlaufzeitverzerrung weisen Signale niedriger Frequenz eine kleinere Laufzeit auf als höherfrequente Signale. Bei einer negativen Gruppenlaufzeitverzerrung weisen Signal niedriger Frequenz eine größere Laufzeit auf als höherfrequente Signale. Bei der Erfindung leitet die erste Meßeinheit M1 mittels einer PLL-Schaltung aus den Synchronisationsimpulsen CRI ein Abtastsignal I ab. Mit dem Abtastsignal I tastet sie anschließend das gegenüber den hochfrequenten Synchronisationsimpulsen CRI relativ niedrigfrequente Rahmenkennwort FC ab. Figur 3a zeigt das Rahmenkennwort FC des Teletextsignals S mit einer durchgezogenen Linie. Dieses wird mit gestrichelt eingezeichneten Impulsen des Abtastsignals I abgetastet.

Figur 3a ist zu entnehmen, daß die Abtastung des Rahmenkennwortes FC tatsächlich die genormte Bitfolge 1110 0100 ergibt. Das heißt, daß die Signalflanken des Rahmenkennwortes FC relativ zu den Abtastimpulsen des Abtastsignals I in erwarteter Weise angeordnet sind.

Figur 3b zeigt nun einen Fall, bei dem eine negative Gruppenlaufzeitverzerrung vorliegt. Konkret ist die Laufzeit des niedrigfrequenten Rahmenkennworts FC größer als diejenige des aus den Synchronisationsimpulsen CRI abgeleiteten Abtastsignals I. Daher kommt es im dargestellten Fall zu einem falschen Abtastergebnis 1111 0100. Da das in Figur 3a dargestellte richtige Abtastergebnis bekannt und in der ersten Meßeinheit M1 gespeichert ist, erkennt die erste Meßeinheit M1, daß die Signalflanken des Rahmenkennwortes FC in Figur 3b nicht die erwartete relative Lage zu den Abtastimpulsen des Abtastsignals I aufweisen. Das Vorliegen einer negativen Gruppenlaufzeitverzerrung ist auf diese Weise erkannt und die erste Meßeinheit M1 aktiviert über den ersten Schalter S1 das erste Filter F1. Das erste Filter F1 ist ein Allpaß, der bewirkt, daß die Gruppenlaufzeitverzerrung wenigstens teilweise kompensiert wird, indem die hochfreqenten Abschnitte des Teletextsignals S gegenüber seinen niedrigfrequenten Abschnitten verzögert werden.

Statt durch das erste Filter F1 kann eine Kompensation der Gruppenlaufzeitverzerrung auch dadurch erfolgen, daß die erste Meßeinheit M1 nach dem Feststellen dieser Störungsart die Phasenlage des Abtastsignals I in der Weise beeinflußt, daß die Signalflanken des Rahmenkennwortes FC relativ zu den Abtastimpulsen des angepaßten Abtastsignals die vorbestimmte bzw. erwartete Lage aufweisen. Im Falle der in Figur 3b dargestellten Gruppenlaufzeitverzerrung verändert die erste Meßeinheit M1 die Phase des Abtastsignals I dann so weit, daß sich wieder der in Figur 3a gezeigte Zustand einstellt. Mit anderen Worten, das aus den Synchronisationsimpulsen CRI abgeleitete Abtastsignal I wird auf das Rahmenkennwort FC synchronisiert. Anschließend wird das Abtastsignal I zur Abtastung der auf das Rahmenkennwort folgenden Nutzsignale des Teletextsignals angewendet. Es wird zu diesem Zweck der Abtrenneinheit 1 in Figur 1 zugeführt.

Die Erfindung hat den Vorteil, daß Entzerrungsfilter nur dann aktiviert werden, wenn sie tatsächlich benötigt werden, das heißt, wenn eine entsprechende Störungsart vorliegt. Stellt keine der Meßeinheiten M1 bis M3 eine Störung fest, wird das Teletextsignal S ungefiltert der Abtrenneinheit 1 zugeführt. Es kommt dann zu keinerlei Beeinträchtigung des Teletextsignals durch nicht benötigte Filter. Liegt nur eine der Störungsarten (frequenzabhängige Dämpfung, Gruppenlaufzeitverzerrung oder Rauschen) vor, wird nur dasjenige Filter F1 bis F3 aktiviert, das zur Kompensation gerade dieser Störungsart ausgelegt ist.

Bei anderen Ausführungsbeispielen der Erfindung ist auch eine feinstufigere Entzerrung als in Figur 1 dargestellt möglich. Zu diesem Zweck können die Meßeinheiten M1 bis M3 verschiedene Störgrade unterscheiden und aktivieren dementsprechend Filter, die zur Kompensation der Störungen des entsprechenden Störungsgrades geeignet sind.

Bei anderen Ausführungen der Erfindung ist es möglich, die Störungsmessung nicht auf die Synchronisationsimpulse CRI und das Rahmenkennwort FC einer einzigen Teletextzeile zu beschränken, sondern eine Mittelung der Meßergebnisse für verschiedene Teletextzeilen vorzunehmen.

Die in Figur 1 gezeigten Filter F1 bis F3 können entweder analoge oder digitale Filter sein.

Die Erfindung ist auch auf andere TV-Datendienste anwendbar, zum Beispiel auf den NTSC-Teletext (NABTS).

## Patentansprüche

1. Entzerrungsverfahren für ein Signal (S), das in Austastlücken eines Videosignals (CVBS) übertragen wird,
bei dem
- anhand des empfangenen Signals (S) festgestellt wird, ob eine Störung in Form einer frequenzabhängigen Dämpfung vorliegt, indem Minima (A) eines relativ hochfrequenten Abschnitts (CRI) des Signals (S) mit einem Schwarzwert (SW) des Videosignals (CVBS) verglichen werden,
- und eine wenigstens teilweise Kompensation dieser Störung nur durchgeführt wird, wenn die Differenz zwischen den Minima (A) und dem Schwarzwert (SW) einen Grenzwert überschreitet.

2. Verfahren nach Anspruch 1,
bei dem zur Kompensation der Störung ein Peaking-Filter (F2) verwendet wird.

3. Verfahren nach einem der Ansprüche 1 oder 2,
bei dem das Signal (S) ein Teletext-Signal und der hochfrequente Abschnitt (CRI) Synchronisationsimpulse enthält. -

4. Abtrennstufe zum Abtrennen eines Signals, das in Austastlücken eines ihr an einem Eingang (IN) zugeführten Videosignals (CVBS) übertragen wird,
- mit einem Eingang (IN), der mit einer Meßvorrichtung (M2) zur Feststellung einer frequenzabhängigen Dämpfung des Signals und mit einem aktivierbaren Filter (F2) zur Kompensation einer frequenzabhängigen Dämpfung des Signals verbunden ist,
- deren Meßvorrichtung (M2) einen Ausgang aufweist, über den sie das Filter (F2) nur aktiviert, wenn sie feststellt, daß die Differenz zwischen Minima (A) eines relativ hochfrequenten Abschnitts (CRI) des Signals (S) und einem Schwarzwert (SW) des Videosignals (CVBS) einen Grenzwert überschreitet.

## Claims

1. An equalisation process for a signal (S) which is transmitted in blanking intervals of a video signal (CVBS), in which
- it is established by means of the received signal (S) whether there is interference in the form of a frequency-dependent attenuation by minimum values (A) of a relatively high-frequency portion (CRI) of the signal (S) being compared with a black level (SW) of the video signal (CVBS),
- and an at least partial compensation of this interference is only carried out if the difference between the minimum values (A) and the black level (SW) exceeds a limit value.

2. A process according to Claim 1,
in which a peaking filter (F2) is used for the compensation of the interference.

3. A process according to one of Claims 1 or 2,
in which the signal (S) contains a Teletext signal and the high-frequency portion (CRI) contains synchronising pulses.

4. A slicer for slicing a signal which is transmitted in blanking intervals of a video signal (CVBS) supplied to it an input (IN),
- having an input (IN), which is connected to a measuring device (M2) for determining a frequency-dependent attenuation of the signal and to an activatable filter (F2) for the compensation of a frequency-dependent attenuation of the signal,
- the measuring device (M2) of which comprises an output via which it only activates the filter (F2) when it establishes that the difference between minimum values (A) of a relatively high-frequency portion (CRI) of the signal (S) and a black level (SW) of the video signal (CVBS) exceeds a limit value.

## Revendications

1. Procédé de correction d'un signal (S) transmis dans les intervalles de détection d'un signal vidéo (CVBS),
selon lequel
- à partir du signal reçu (S) on détermine la présence d'une perturbation sous la forme d'un amortissement dépendant de la fréquence, en comparant les minima (A) d'un segment haute fréquence relatif (CRI) du signal (S) à une valeur de noir (SW) du signal vidéo (CVBS), et
- on effectue seulement une compensation au moins partielle de cette perturbation si la différence entre les minima (A) et la valeur de noir (SW) dépasse une valeur limite.

2. Procédé selon la revendication 1,
selon lequel
on utilise un filtre sélecteur de pic (F2) pour compenser la perturbation.

3. Procédé selon l'une des revendications 1 ou 2,
**caractérisé en ce que**
le signal (S) contient un signal de télétexte et le segment haute fréquence (CRI) contient des impulsions de synchronisation.

4. Etage séparateur pour séparer un signal transmis dans les intervalles de suppression d'un signal vidéo (CVBS) appliqué à son entrée (IN), comprenant
- une entrée (IN), reliée à une installation de mesure (M2) pour déterminer un amortissement dépendant de la fréquence du signal et un filtre (F2) activé pour compenser un amortissement dépendant de la fréquence du signal,
- son dispositif de mesure (M2) présente une sortie par laquelle il active seulement le filtre (F2) s'il est constaté que la différence entre les minima (A) d'un segment de haute fréquence relatif (CRI) du signal (S) et une valeur de noir (SW) du signal vidéo (CVBS) dépasse une valeur limite.
